(19) Europäisches Patentamt
European Patent Office
Office européen des brevets

(11) Veröffentlichungsnummer: **0 193 047**
**B1**

(12) # EUROPÄISCHE PATENTSCHRIFT

(45) Veröffentlichungstag der Patentschrifft: **21.03.90**

(21) Anmeldenummer: **86101888.5**

(22) Anmeldetag: **14.02.86**

(51) Int. Cl. 5: **C 07 F 15/04**, C 08 F 4/80, C 08 F 4/70, C 08 F 10/00

(54) **Organische Nickel-verbindungen, deren Herstellung und Verwendung als Polymerisationskatalysatoren.**

(30) Priorität: **27.02.85 DE 3506835**

(43) Veröffentlichungstag der Anmeldung:
**03.09.86 Patentblatt 86/36**

(45) Bekanntmachung des Hinweises auf die Patenterteilung:
**21.03.90 Patentblatt 90/12**

(84) Bennante Vertragsstaaten:
**DE FR GB IT**

(56) Entgegenhaltungen:
**EP-A-0 046 331**
**EP-A-0 101 927**
**EP-A-0 137 389**

(73) Patentinhaber: **BAYER AG**
**D-5090 Leverkusen 1 Bayerwerk (DE)**

(72) Erfinder: **Ostoja Starzewski, Karl-Heinz Aleksander, Dr.**
**Jeschkenweg 10**
**D-6368 Bad Vilbel (DE)**
Erfinder: **Witte, Josef, Dr.**
**Haferkamp 10**
**D-5000 Köln 80 (DE)**
Erfinder: **Bartl, Herbert, Dr.**
**Eichendorffweg 10**
**D-5068 Odenthal (DE)**

EP 0 193 047 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft Nickel-Verbindungen, die durch Reaktion einer Nickel-(O)-Verbindung oder einer Nickelverbindung, die in situ in eine Nickel-(O)-Verbindung überführt werden kann, mit einem Addukt oder einem Gemisch aus Maleinsäureanhydrid und einem tertiären Phosphin, gegebenenfalls mit einer Verbindung der Formel (I)

$R^3$
\
$R^2$–P (= X)$_n$ (I)
/
$R^1$

und gegebenenfalls mit einer Organoaluminiumverbindung herstellbar sind sowie deren Herstellung und deren Verwendung als Katalysatoren bei der Polymerisation und Copolymerisation von 1-Olefinen und zur Polymerisation von Acetylen.

Aus der deutschen Offenlegungsschrift 2 923 206 ist ein Verfahren zur Herstellung von Polyethylenwachsen bekannt, das dadurch gekennzeichnet ist, daß man Ethylen in einem Lösungsmittelgemisch aus einem aromatischen Kohlenwasserstoff und einem hydroxylgruppenhaltigen Solvens bei einer Temperatur von 50 bis 100°C und einem Druck von 0,7 bis 350 bar Überdruck mit Hilfe eines Katalysators, bestehend aus a) einer nullwertigen Nickelverbindung und b) einem Addukt und/oder Gemisch aus einer chinoiden Verbindung und einem tertiären Phosphin, polymerisiert.

Es entsteht ein niedermolekulares Polyethylen; das Verfahren ist in der Lösungsmittelauswahl sehr beschränkt.

Aus EP 137 389 ist es weiterhin bekannt, die Katalysatorsysteme der obigen DE-OS dadurch weiterzuentwickeln, daß man zusätzlich zur Nickel-(O)-Verbindung und dem Addukt oder Gemisch aus einer chinoiden Verbindung und einem tertiären Phosphin eine Verbindung der Formel ($R^1$, $R^2$, $R^3$) P = X zur Katalysatorbildung heranzieht. Ein solcher Katalysator erlaubt die Herstellung polymerer Olefine statt des niedermolekularen Polyethylens,

Es wurde nun überraschenderweise gefunden, daß man diese Nachteile überwinden kann und gezielt Polyolefinwachse, und mittel- und hochmolekulare Polyolefinkunststoffe erzeugen kann, wenn man neue Nickelkatalysatoren verwendet, die an Stelle der chinoiden Verbindung Maleinsäureanhydrid (MSA) enthalten und gegebenenfalls zusätzlich die Verbindung der Formel I und eine Organoaluminiumverbindung.

Die neuen Katalysatoren eignen sich auch zur Copolymerisation von Ethen mit anderen 1-Olefinen, z. B. Propen, 1-Buten, 1-Hexen oder 1-Octen, wobei die Copolymerisate bis zu 10 Mol-%, bezogen auf Gesamtmonomere, an von Ethen verschiedenen 1-Olefinen enthalten.

Ferner eignen sich die neuen Katalysatoren zur Polymerisation von Acetylen.

Gegenstand der Erfindung sind demgemäß Nickel-Verbindungen, die durch Reaktion einer Nickel-(O)-Verbindung oder einer Nickelverbindung, die in situ in eine Nickel-(O)-Verbindung überführt werden kann, mit einem Addukt oder einem Gemisch aus MSA und einem tertiären Phosphin, gegebenenfalls mit einer Verbindung der Formel (I)

$R^3$
\
$R^2$– P (= X)$_n$ (I)
/
$R^1$

in der

$R^1$, $R^2$ und $R^3$ unabhängig voneinander gegebenenfalls durch Halogen, Hydroxi, $C_1$-$C_{20}$-Alkoxi, Nitro oder $C_6$-$C_{12}$-Aryloxi substituiertes $C_1$-$C_{20}$-Alkyl, $C_2$-$C_{20}$-Alkenyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_6$-$C_{12}$-Aryl-$C_2$-$C_{20}$-alkenyl, $C_1$-$C_{20}$-Alkyl-$C_3$-$C_8$-cycloalkyl und $C_6$-$C_{12}$-Aryl-$C_3$-$C_8$-cycloalkyl, Di-$C_1$-$C_4$-alkylamino, Phenoxi oder Alkoxi,

$R_4$, $R_5$ und $R_6$ Wasserstoff, Silyl, Halogen, Cyano oder $R^1$,

$R^5$
/
X O, $NR_4$ oder C und
\
$R^6$

n Null oder Eins bedeuten,

und gegebenenfalls mit einer Organoaluminiumverbindung herstellbar sind.

Geeignete tertiäre Phosphine entsprechen der Formel (II)

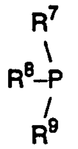

(II)

worin

$R^7$, $R^8$ und $R^9$ unabhängig voneinander, gegebenenfalls durch Halogen, Hydroxi, $C_1$-$C_{20}$-Alkoxi oder $C_6$-$C_{12}$-Aryloxi substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxi, $C_1$-$C_{20}$-Alkoxi oder $C_6$-$C_{12}$-Aryloxi bedeuten.

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und Methoxi.

Bevorzugte Reste $R^4$, $R^5$ und $R^6$ sind Wasserstoff, $C_1$-$C_6$-Alkyl, Phenyl, $C_1$-$C_4$-Alkylphenyl, Chlorphenyl, Nitrophenyl, Trimethylsilyl, Chlor und Cyano.

$R_7$, $R_8$, $R_9$ sind vorzugsweise Cyclohexyl, Phenyl Tolyl, Benzyl, Vinyl und $C_1$-$C_4$-Alkyl.

Als Nickel-(O)-Verbindungen seien beispielhaft $Ni(cyclooctadien)_2$ und $Ni(allyl)_2$ genannt.

Als Nickelverbindungen, die in situ in Nickel-(O)-Verbindungen überführt werden können, seien beispielsweise aufgeführt: Ni-acetylacetonat, Ni-octanoat und Ni-stearat, die mit Hilfe von üblichen Reduktionsmitteln wie Boranat, Alanat, Aluminiumalkylen oder Lithiumorganylen reduziert werden können.

Geeignete Organoaluminiumverbindungen sind z. B. Trialkyl- und Trialkoxyaluminiumverbindungen, in denen die Alkyl- und Alkoxygruppen vorzugsweise 1 bis 4 C-Atome aufweisen.

Die erfindungsgemäßen Nickel-Verbindungen, die eine Verbindung der Formel I enthalten, stehen nach den vorliegenden Erkenntnissen mit der Formel (III)

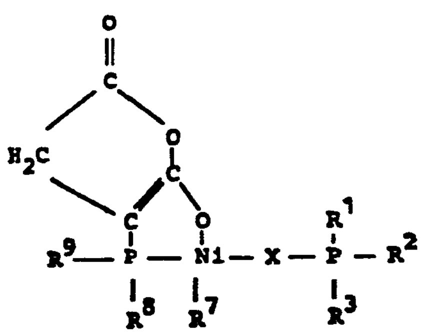

(III)

worin $R^1$, $R^2$, $R^3$, $R^7$, $R^8$, $R^9$ und X die vorstehend genannte Bedeutung besitzen, im Einklang.

Bevorzugt werden pro Mol Nickel-(O)-Verbindung je 1 - 4 Mole MSA und des tertiären Phosphins und 0 - 4 Mole der Verbindung der Formel (I) eingesetzt, besonders bevorzugt pro Mol der Nickel-(O)-Verbindung 1 Mol MSA, sowie tertiäres Phosphin und 1 Mol der Verbindung der Formel (I).

Die Umsetzungstemperatur beträgt 0 - 100°C, insbesondere 20 - 70°C.

Die Reaktion wird unter Ausschluß von Sauerstoff, vorzugsweise in einem Lösungsmittel das gegenüber den Reaktanden inert sein muß, wie Benzol, Toluol, Cyclohexan und n-Hexan, durchgeführt.

Nach Beendigung der Reaktion wird der Katalysator gewöhnlich ohne Isolierung direkt zur Polymerisation von 1-Olefinen eingesetzt. Das Reaktionsgemisch kann auch filtriert werden, wobei das Filtrat, das den Katalystaor enthält, zur Polymerisation eingesetzt werden kann. Der Katalysator kann auch durch Einengen der Reaktionsmischung oder durch Einengen und/oder Abkühlen des Filtrates isoliert werden.

Es ist auch möglich, den Katalysator in Anwesenheit der zu polymerisierenden Olefine herzustellen.

Die erfindungsgemäßen Verbindungen sind gut transportierbar, gut dosierbar, und in einer Vielzahl von Lösungsmittel katalytisch wirksam und in weitem Temperaturbereich und in weitem Druckbereich aktiv.

Ein weiterer Gegenstand der Erfindung ist die Verwendung der erfindungsgemäßen Nickel-Verbindungen als Katalysatoren bei der Polymerisation und Copolymerisation von 1-Olefinen, insbesondere von Ethen, und bei der Polymerisation von Acetylen.

Die Menge der verwendeten Nickel-Verbindung ist nicht kritisch. Typische Katalysatorkonzentrationen liegen zwischen $10^{-2}$ bis $10^{-4}$ Mol pro Liter. Die Menge an Katalysator, bezogen auf Ethen, liegt im Bereich von 0,005 bis 10 Gewichtsprozent, vorzugsweise 0,01 bis 0,1 Gewichtsprozent.

Für die Polymerisation von Olefinen mit den erfindungsgemäßen Katalysatoren eignen sich folgende Verfahrensweisen:

a) Vorlegen des festen, gelösten oder suspendierten Katalysators (oder seiner Komponenten), Zugabe des Olefins, dann Aufheizen
b) Vorlegen des Olefins, Injektion der Katalysator-Lösung bzw. -Suspension (oder seiner Komponenten)
c) kontinuierliches Dosieren der Katalysator-Lösung oder -Suspension (oder seiner Komponenten) bei vorgegebenen gewünschten Polymerisations-Bedingungen (Druck, Temperatur) zum Olefin.

Die Polymerisation kann in einem Lösungs- bzw. Verdünnungsmittel bzw. Suspensionsmittel durchgeführt werden, wobei beispielsweise Aliphaten wie n-Hexan, Cyclohexan, Aromaten wie Benzol, Toluol, Xylol, Chlorbenzol, Ketone wie Aceton, Methylethylketon, Ester wie Essigsäureethylester, Säureamide wie Dimethylformamid und Ether wie Tetrahydrofuran oder Mischungen dieser Lösungsmittel in Frage kommen.

Die Polymerisation kann sowohl kontinuierlich als auch diskontinuierlich durchgeführt werden.

Die Polymerisationstemperatur beträgt bevorzugt 20 bis 200°C, inbesondere von 60 bis 150°C. Der anzuwendende Olefindruck beträgt mindestens 1 bar, bevorzugt sind 5 bis 1000 bar.

**Beispiele**

**Allgemeine Vorschrift zur Ethen-(Co)polymerisation**

Der erfindungsgemäße Katalysator wird als Lösung oder Suspension in Toluol in einen Autoklaven, der sauerstoff- und wasserfrei ist und das Lösungsmittel enthält, injiziert (single pulse injection), wobei Reaktionslösungen der Katalysator-Komponenten ("in situ"-Katalysatoren) verwendet werden können. Gegebenenfalls wird das Comonomer zugegeben. Der Autoklav wird nach Aufdrücken von Ethen auf die gewünschte Temperatur gebracht. Nach 1 bis 4 Stunden Polymerisationszeit läßt man abkühlen, entspannt den Autoklaven, und isoliert das Polymerisat durch Filtration, bei löslichen bzw. flüssigen Anteilen durch Entfernen des Lösungsmittels im Rotationsverdampfer.

2 mmol Bis-cyclooctadien-nickel(O) (Komponente I) in 50 ml trockenem stickstoffgesättigtem Toluol werden unter Stickstoff mit 2 mmol Addukt aus Triphenylphosphin und MSA (Komponente II) und 2 mmol Komponente III gemischt. Unter intensivem Rühren erwärmt man 30 Minuten auf 40 bis 60°C, setzt dann gegebenenfalls 2 mmol der Komponente IV zu und rührt weitere 30 Minuten. Die dunkelgelb-braune Suspension wird bei der nachfolgenden Polymerisation eingesetzt.

| Beisp. | Componenten III u. IV | Monomer Comonomer Lösungsmittel | Reaktionstemperatur (°C) Reaktionszeit (h) | Ausbeute (g) | Schmelzpunkt (°C) | Grenzviskosität in Tetralin bei 140°C (dl/g) | Dichte (g/cm$^3$) | Comonomer-Ant. Mol-% | Gew.-% |
|---|---|---|---|---|---|---|---|---|---|
| 1 | Ethylidentriphenylphosphoran; | 100 bar Ethen 1 l Cyclohexan | 100 4 | s:300 l: - | 129 | 0.48 | 0.976 | - | - |
| 2 | Ethylidentriphenylphosphoran | 100 bar Ethen 1 l Toluol | 100 4 | s:344 l: - | 129 | 0.34 | 0.977 | - | - |
| 3 | Ethylidentriphenylphosphoran; Aluminiumtriisopropylat | 100 bar Ethen 1 l Cyclohexan | 100 4 | s:362 l: - | 128 | 0.61 | 0.976 | - | - |
| 4 | Triphenylphosphin; Aluminiumtriisopropylat | 100 bar Ethen 1 l Cyclohexan | 100 4 | s:63 l:44 | 134 | 2.22 | 0.967 | - | - |
| 5 | Ethylidentriphenylphosphoran; Aluminiumtriisopropylat | 100 bar Ethen 0,5 l Propen 1 l Cyclohexan | 100 4 | s:380 l: - | 119 | 0.23 | 0.953 | 2.4 | 3.6 |
| 6 | Ethylidentriphenylphosphoran | 100 bar Ethen 0.5 l 1-Octen 1 l Cyclohexan | 100 4 | s:420 l: - | 124 | 0.19 | 0.96 | 1.0 | 3.9 |

s: Polymerausbeute
l: Oligomerausbeute

**Beispiel 7**

10 bar Ethen werden in 12 l Cyclohexan bei 100°C 1 Stunde mit einem Katalysator aus den Komponenten I und II und Methylentriphenylphosphoran (jeweils 2 mmol) in 200 ml Toluol entsprechend der vorstehenden Vorschrift durch "multi pulse injection" polymerisiert. "Multi pulse injection" bedeutet, daß der Katalysator portionsweise über die Dauer der Reaktion in den Autoklaven injiziert wird.

Man erhält 47 g Polymerausbeute des Schmelzpunktes 127°C, der Grenzviskosität in Tetralin bei 140°C 0.43 dl/g und der Dichte 0.969 g/$cm^3$ und 45 g Oligomerausbeute (Öl).

**Beispiel 8**

Entsprechend Beispiel 7 wird Ethen mit einem Katalysator polymerisiert, dessen Komponente III Ethylidentriphenylphosphoran (2 mmol) und dessen Komponente IV Aluminiumtriisopropylat (2 mmol) ist.

Man erhält 205 g Polymerausbeute des Schmelzpunktes 127°C, der Grenzviskosität in Tetralin bei 140°C 0.33 dl/9 und der Dichte 0.976 g/$cm^3$ und 33 g Oligomerausbeute (Öl).

**Patentansprüche**

1. Nickel-Verbindungen, die durch Reaktion einer Nickel-(O)-Verbindung oder einer Nickelverbindung, die in situ in eine Nickel-(O)-Verbindung überführt werden kann, mit einem Addukt oder einem Gemisch aus Maleinsäureanhydrid und einem tertiären Phosphin, gegebenenfalls mit einer Verbindung der Formel (I)

$R^3$
\
$R^2$–P (= X)$_n$ (I)
/
$R^1$

in der

$R^1$, $R^2$ und $R^3$ unabhängig voneinander gegebenenfalls durch Halogen, Hydroxi, $C_1$-$C_{20}$-Alkoxi, Nitro oder $C_6$-$C_{12}$-Aryloxi substituiertes $C_1$-$C_{20}$-Alkyl, $C_2$-$C_{20}$-Alkenyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, $C_6$-$C_{12}$-Aryl-$C_2$-$C_{20}$-alkenyl, $C_1$-$C_{20}$-Alkyl-$C_3$-$C_8$-cycloalkyl und $C_6$-$C_{12}$-Aryl-$C_3$-$C_8$-cycloalkyl, Di-$C_1$-$C_4$-alkylamino, Phenoxi oder Alkoxi

$R^4$, $R^5$ und $R^6$ Wasserstoff, Silyl, Halogen, Cyano oder $R^1$,

$R^5$
/
X O, $NR^4$ oder C und
\
$R^6$

n Null oder Eins bedeuten,

und gegebenenfalls mit einer Organoaluminiumverbindung herstellbar sind.

2. Verbindungen nach Anspruch 1, wobei

$R^1$, $R^2$ und $R^3$ $C_1$-$C_6$-Alkyl, Cyclohexyl, Phenyl, Tolyl, Benzyl, Di-$C_1$-$C_4$-alkylamino, Phenoxy oder Methoxy

$R^4$, $R^5$ und $R^6$ Wasserstoff, $C_1$-$C_6$-Alkyl, Phenyl, $C_1$-$C_4$-Alkylphenyl, Chlorphenyl, Nitrophenyl, Trimethylsilyl, Chlor und Cyano bedeuten,

das tertiäre Phosphin der Formel (II)

$R^7$
\
$R^8$–P (II)
/
$R^9$

entspricht, worin

$R^7$, $R^8$, $R^9$ Cyclohexyl, Phenyl, Tolyl, Benzyl, Vinyl und $C_1$-$C_4$-Alkyl bedeuten.

und als Organoaluminiumverbindung ein Trialkyl- oder Trialkoxyaluminium eingesetzt wird.

3. Verfahren zur Herstellung von Nickel-Verbindungen gemäß Ansprüchen 1 und 2, dadurch gekennzeichnet, daß man eine Nickel-(O)-Verbindung oder eine Verbindung, die in situ in eine Nickel-(O)-Verbindung überführt werden kann, mit einem Addukt oder einem Gemisch aus Maleinsäureanhydrid und einem tertiären Phosphin, gegebenenfalls mit einer Verbindung der Formel (I)

```
    R3
     \
R2–P (= X)n          (I)
     /
    R1
```

worin $R^1$, $R^2$, $R^3$ und X die in Anspruch 1 angegebene Bedeutung haben und gegebenenfalls mit einer Organoaluminiumverbindung, unter Ausschluß von Sauerstoff umsetzt.

4. Verfahren nach Anspruch 3, dadurch gekennzeichnet daß man pro Mol Nickel-(O)-Verbindung je 1 bis 4 Mole Maleinsäureanhydrid und des tertiären Phosphins und 0 bis 4 Mole der Verbindung (I) einsetzt.

5. Verfahren nach Anspruch 3, dadurch gek-nnzeichnet, daß man die Umsetzung bei 0 bis 100°C in einem inerten Lösungsmittel durchführt.

6. Verwendung der Nickelverbindungen gemäß Ansprüchen 1 und 2 als Katalysatoren bei der Polymerisation und Copolymerisation von 1-Olefinen.

7. Verwendung der Nickelverbindungen gemäß Ansprüchen 1 und 2 als Katalysatoren bei der Polymerisation und Copolymerisation von Ethen.

8. Verwendung der Nickelverbindungen gemäß Ansprüchen 1 und 2 als Katalysatoren bei der Polymerisation von Acetylen.

**Claims**

1. Nickel compounds which can be prepared by reacting a nickel(0) compound or a nickel compound which can be converted into a nickel(0) compound in situ with an adduct or a mixture of maleic anhydride and a tertiary phosphine, if appropriate with a compound of the formula (I)

```
    R3
     \
R2–P (= X)n          (I)
     /
    R1
```

in which

$R^1$, $R^2$ and $R^3$, independently of one another, denote $C_1$-$C_{20}$-alkyl, $C_2$-$C_{20}$-alkenyl, $C_6$-$C_{12}$-aryl or $C_3$-$C_8$-cycloalkyl, each of which is optionally substituted by halogen, hydroxyl, $C_1$-$C_{20}$-alkoxy, nitro or $C_6$-$C_{12}$-aryloxy, furthermore denotes $C_6$-$C_{12}$-aryl-$C_1$-$C_{20}$-alkyl, $C_1$-$C_{20}$-alkyl-$C_6$-$C_{12}$-aryl, $C_6$-$C_{12}$-aryl-$C_2$-$C_{20}$-alkenyl, $C_1$-$C_{20}$-alkyl-$C_3$-$C_8$-cycloalkyl and $C_6$-$C_{12}$-aryl-$C_3$-$C_8$-cycloalkyl, di-$C_1$-$C_4$-alkylamino, phenoxy or alkoxy,
$R^4$, $R^5$ and $R^6$ denote hydrogen, silyl, halogen, cyano or $R^1$,

```
                     R5
                    /
X  denotes O, NR4 or C and
                    \
                     R6
```

n  denotes zero or one,

and optionally with an organoaluminium compound.

2. Compounds according to Claim 1, where

$R^1$, $R^2$ and $R^3$ denote $C_1$-$C_6$-alkyl, cyclohexyl, phenyl, tolyl, benzyl, di-$C_1$-$C_4$-alkylamino, phenoxy or methoxy,

$R^4$, $R^5$ and $R^6$ denote hydrogen, $C_1$-$C_6$-alkyl, phenyl, $C_1$-$C_4$-alkylphenyl, chlorophenyl, nitrophenyl, trimethylsilyl, chlorene and cyano,

the tertiary phosphine conforms to the formula (II)

$R^7$
\
$R^8$–P (II)
/
$R^9$

in which

$R^7$, $R^8$ and $R^9$ denote cyclohexyl, phenyl, tolyl, benzyl, vinyl and $C_1$-$C_4$-alkyl, and the organoaluminium compound employed is a trialkyl- or trialkoxy aluminium.

3. Process for the preparation of nickel compounds according to Claims 1 and 2, characterized in that a nickel(0) compound or a compound which can be converted in situ into a nickel(0) compound is reacted with an adduct or a mixture of maleic anhydride and a tertiary phosphine, if appropriate with a compound of the formula (I)

$R^3$
\
$R^2$–P (= X)$_n$ (I)
/
$R^1$

in which $R^1$, $R^2$, $R^3$ and X have the meaning indicated in Claim 1, and if appropriate with an organoaluminium compound, with exclusion of oxygen.

4. Process according to Claim 3, characterized in that 1 to 4 moles of each of maleic anhydride and the tertiary phosphine and 0 to 4 moles of compound (I) are employed per mole of nickel(0) compound.

5. Process according to Claim 3, characterized in that the reaction is carried out at 0 to 100°C in an inert solvent.

6. Use of the nickel compounds according to Claims 1 and 2 as catalysts in the polymerisation and copolymerisation of 1-olefins.

7. Use of the nickel compounds according to Claims 1 and 2 as catalysts in the polymerisation and copolymerisation of ethene.

8. Use of the nickel compounds according to Claims 1 and 2 as catalysts in the polymerisation of acetylene.

**Revendications**

1. Composés de nickel qui peuvent être préparés par réaction d'un composé de nickel-(0) ou d'un composé de nickel qui peut être transformé in situ en un composé de nickel-(0), avec un produit d'addition ou un mélange d'anhydride d'acide maléique et d'une phosphine tertiaire, éventuellement avec un composé de formule (I)

$R^3$
\
$R^2$–P (= X)$_n$ (I)
/
$R^1$

dans laquelle

$R^1$, $R^2$ et $R^3$ représentent indépendamment les uns des autres un groupe alkyle en $C_1$ à $C_{20}$, éventuellement substitué par un halogène, un radical hydroxy, alkoxy en $C_1$ à $C_{20}$, nitro ou aryloxy en $C_6$ à $C_{12}$, un groupe alcényle en $C_2$ à $C_{20}$, un groupe aryle en $C_6$ à $C_{12}$ ou un groupe cycloalkyle en $C_3$ à $C_8$, en outre un groupe (aryle en $C_6$ à $C_{12}$)-alkyle en $C_1$ à $C_{20}$, (alkyle en $C_1$ à $C_{20}$)-aryle en $C_6$ à $C_{12}$, (aryle en $C_6$ à $C_{12}$)-alcényle en $C_2$ à $C_{20}$, (alkyle en $C_1$ à $C_{20}$)-cycloalkyle en $C_3$ à $C_8$ et (aryle en $C_6$ à $C_{12}$)-cycloalkyle en $C_3$ à $C_8$, di(alkyle en $C_1$ à $C_4$)-amino, phénoxy ou alkoxy,

$R^4$, $R^5$ et $R^6$ représentent l'hydrogène, un groupe silyle, un halogène, un groupe cyano ou $R^1$,

```
                      R5
                     /
X  représente O, NR4 ou C et
                     \
                      R6
```

n  a la valeur zéro ou un,

et le cas échéant avec un composé organique d'aluminium.

2. Composés suivant la revendication 1, dans la formule desquels

$R^1$, $R^2$ et $R^3$ représentent un groupe alkyle en $C_1$ à $C_6$, cyclohexyle, phényle, tolyle, benzyle, di(alkyle en $C_1$ à $C_4$)amino, phénoxy ou méthoxy,
$R^4$, $R^5$ et $R^6$ représentent l'hydrogène, un groupe alkyle en $C_1$ à $C_6$, phényle, (alkyle en $C_1$ à $C_4$)-phényle, chlorophényle, nitrophényle, triméthylsilyle, chloro et cyano, la phosphine tertiaire répond à la formule (II):

```
  R7
   \
R8–P                (II)
   /
  R9
```

dans laquelle

$R^7$, $R^8$, $R^9$ représentent des groupes cyclohexyle, phényle, tolyle, benzyle, vinyle et alkyle en $C_1$ à $C_4$,

et on utilise comme composé organique d'aluminium un trialkylaluminium ou un trialkoxyaluminium.

3. Procédé de préparation de composés de nickel suivant les revendications 1 et 2, caractérisé en ce qu'on fait réagir un composé de nickel-(0) ou un composé qui peut être transformé in situ en un composé de nickel-(0) avec un produit d'addition ou un mélange d'anhydride d'acide maléique et d'une phosphine tertiaire, éventuellement avec un composé de formule (I)

```
  R3
   \
R2–P (= X)n         (I)
   /
  R1
```

dans laquelle $R^1$, $R^2$, $R^3$ et X ont la définition indiquée dans la revendication 1 et le cas échéant avec un composé organique d'aluminium, à l'abri de l'oxygène.

4. Procédé suivant la revendication 3, caractérisé en ce qu'on utilise par mole de composé de nickel-(0) 1 à 4 moles d'anhydride d'acide maléique, 1 à 4 moles de phosphine tertiaire et 0 à 4 moles de composé (I).

5. Procédé suivant la revendication 3, caractérisé en ce qu'on conduit la réaction à 0 - 100°C dans un solvant inerte.

6. Utilisation des composés de nickel suivant les revendications 1 et 2 comme catalyseurs dans la polymérisation et la copolymérisation de 1-oléfines.

7. Utilisation des composés de nickel suivant les revendications 1 et 2 comme catalyseurs dans la polymérisation et la copolymérisation d'éthène.

8. Utilisation des composés de nickel suivant les revendications 1 et 2 comme catalyseurs dans la polymérisation d'acétylène.